# EUROPÄISCHE PATENTANMELDUNG

(11) **EP 2 596 986 A2**
(43) Veröffentlichungstag der Anmeldung: **29.05.2013**
(21) Anmeldenummer: 12192911.1
(22) Anmeldetag: 16.11.2012
(51) Int. Cl.: B60P 7/13, B60P 1/64, B65G 67/20

(54) **Fahrzeug zum Transport einer Plattform, Plattform, sowie Systeme mit selbigen**

(30) Priorität: 23.11.2011 DE 102011086935
(71) Anmelder: Buse, Heinz, 26160 Bad Zwischenahn (DE)
(72) Erfinder: Buse, Heinz, 26160 Bad Zwischenahn (DE)
(74) Vertreter: Eisenführ, Speiser & Partner

(57) **Zusammenfassung**

Die Erfindung betrifft ein Fahrzeug (1) zum Transport einer Plattform (9) eines Logistiksystems, mit einer Ladefläche (5) zur Aufnahme der Plattform (9), wobei die Plattform (9) Außenabmaße aufweist, die der Ladefläche (5) des Fahrzeugs angepasst sind, und mit einer Verriegelungseinrichtung (15) zum Sichern der Plattform (9) auf der Ladefläche (5), wobei die Verriegelungseinrichtung (15) mit einer an der Plattform (9) ausgebildeten Verriegelungsaufnahme (17) wahlweise in eine Sperrposition oder in eine Freigabeposition bringbar ist, und ein oder mehrere Verriegelungselemente (16) aufweist, die dazu eingerichtet sind, selbsttätig die Sperrposition zum Fixieren der Plattform (9) einzunehmen, wenn die Plattform (9) an das Fahrzeug (1) übergeben worden ist.

## Beschreibung

Die vorliegende Erfindung betrifft ein Fahrzeug zum Transport einer Plattform eines Logistiksystems. Die Erfindung betrifft weiterhin eine Plattform für ein Logistiksystem zur Übergabe der Plattform zu einem Fahrzeug und/oder zur Übernahme der Plattform von dem Fahrzeug. Zudem betrifft die Erfindung ein Transportsystem für eine Plattform eines Logistiksystem sowie wie ein Logistiksystem zur Übergabe einer Plattform zu einem Fahrzeug oder zur Übernahme der Plattform von dem Fahrzeug.

Fahrzeuge der vorstehend bezeichneten Art werden dazu eingesetzt, um Plattformen, auch bezeichnet als Ladungsträger, von einem Ort zu einem anderen Ort zu transportieren, und an den jeweiligen Zielorten an ein Logistiksystem zu übergeben. Die Logistiksysteme sind üblicherweise mit Lagern oder Kommissionierungseinheiten verbunden, in welchen die übergebenen Plattformen gelagert, entladen oder neu beladen werden. Auf diese Weise verarbeitete, beispielsweise neu beladene Plattformen werden sodann von den Logistiksystemen an Fahrzeuge übergeben, die die Plattformen wiederum an einen anderen Ort transportieren. Um eine reibungslosen Austausch zwischen Fahrzeug und Logistiksystem zu gewährleisten, sind die Plattform, die Logistiksysteme und die Fahrzeuge bei bekannten Systemen, beispielsweise bei Logistiksystemen der hiesigen Anmelderin, aneinander angepasst.

Während die Übergabe von Plattformen an Fahrzeuge sowie die Übernahme der Plattformen von den Fahrzeugen bei den bekannten Systemen schon zufriedenstellend funktioniert, besteht dennoch nach wie vor Verbesserungspotential hinsichtlich der Zuverlässigkeit im Betrieb, insbesondere bezüglich der Interaktion zwischen dem Fahrzeug und der Plattform. Ein zentraler Arbeitsschritt beim Übergeben einer Plattform an ein Fahrzeug ist es, die Plattform nach erfolgter Übergabe an dem Fahrzeug zu sichern, um einen störungsfreien Transport zu gewährleisten. Bei bekannten Systemen, beispielsweise wie beschrieben in EP 1 808 387 wird die Plattform manuell von extern mittels einem oder mehrerer Sperrschieber verriegelt, die an der Plattform ausgebildet sind und in entsprechende Vertiefungen oder Aufnahmen in dem Fahrzeug eingreifen. Während dieses System grundsätzlich bereits funktioniert, kann es in extremen Einzelfällen dazu kommen, dass die Vorbereitungen in der Ladefläche beim Einsatz des Fahrzeuges zu anderen Zwecken als dem Transport der speziell angepassten Plattformen stören. Zudem bedingt der manuelle Arbeitsaufwand zum Engt- und Verriegeln der Plattformen an den Fahrzeugen einen gewissen Zeitaufwand.

Der vorliegenden Erfindung lag somit die Aufgabe zugrunde, ein Fahrzeug, eine Plattform sowie Systeme mit selbigen anzugeben, welche einen noch effizienteren Betrieb ermöglichen.

Die Erfindung löst die ihr zugrunde liegende Aufgabe bei einem Fahrzeug der eingangs bezeichneten Art mit einer Ladefläche zur Aufnahme der Plattform, wobei die Plattform Außenabmaße aufweist, die der Ladefläche des Fahrzeugs angepasst sind, mit einer Verriegelungseinrichtung zum Sichern der Plattform auf der Ladefläche, wobei die Verriegelungseinrichtung mit einer an der Plattform ausgebildeten Verriegelungsaufnahme wahlweise in eine Sperrposition oder in eine Freigabeposition bringbar ist, oder ein oder mehrere Verriegelungselemente aufweist, die dazu eingerichtet sind, selbsttätig in die Sperrposition zum Fixieren der Plattform einzunehmen, wenn die Plattform an das Fahrzeug übergeben worden ist.

Die Erfindung macht sich die Erkenntnis zunutze, dass eine deutliche Effizienzsteigerung dadurch erreicht werden kann, dass der bislang manuelle erfolgende Arbeitsschritt des Verriegelns und Entriegelns der Plattform zumindest teilautomatisiert wird. Dies erfolgt gemäß der vorliegenden Erfindung dadurch, dass Verriegelungselemente vorgesehen sind, die selbsttätig in die Sperrposition gelangen und somit keinen manuellen Eingriff mehr erfordern. Somit ist das Fahrzeug nach dem Übergeben der Plattform an das Fahrzeug unmittelbar transportbereit. Im Rahmen der Erfindung wird unter einer erfolgten Übergabe verstanden, dass die Plattform vollständig auf der Ladefläche des Fahrzeugs angeordnet ist und sich dort in der für den Transport bestimmten Endlage befindet. Ein weiterer Vorteil, der sich bei der vorliegenden Erfindung bemerkbar macht ist die Vereinfachung des Plattform-Aufbaus selbst. Während bei den bekannten Systemen jede Plattform eine Verriegelungseinrichtung zum Zusammenwirken mit entsprechenden Aufnahmen des Fahrzeugs aufweisen musste, ist es gemäß der Erfindung nunmehr möglich, die - konstruktiv bedeutend einfacher gestaltete - Verriegelungsaufnahme auf Seiten der Plattform vorzugsehen und jene Baugruppe mit beweglichen Teilen, nämlich die Verriegelungseinrichtung, auf Seiten des oder der Fahrzeuge auszubilden.

Die Erfindung wird vorteilhaft dadurch weitergebildet, dass die das oder die Verriegelungselemente dazu angepasst sind, die Sperrposition einzunehmen, wenn die Verriegelungseinrichtung und die Verriegelungsaufnahme gegeneinander in Anlage gebracht sind. Dies ist insbesondere der Fall, wenn die zum Transport vorgesehene Endlage der Plattform auf der Ladefläche erreicht ist.

Gemäß einer bevorzugten Ausführungsform der Erfindung ist bzw. sind das oder die Verriegelungselemente derart beweglich an der Verriegelungseinrichtung angeordnet, dass sie während der Übergabe der Plattform an das Fahrzeug gegen eine erste Rückstellkraft ausgelenkt werden und bei erfolgter Übergabe mittels der Rückstellkraft in die Sperrposition gebracht werden. Vorzugsweise sind das oder die Verriegelungselemente so angeordnet, dass die Schwerkraft als Rückstellkraft einer Auslenkung der Verriegelungselemente entgegenwirkt. Gemäß einer besonders bevorzugten Alternative weise die Verriegelungseinrichtung Rückstellelemente auf, beispielsweise Federn, die der Auslenkung entgegenwirkend zum Aufbringen der Rückstellkraft eingerichtet und angeordnet sind. Die Federelemente sind optional in Richtung der Schwerkraft oder entgegen der Richtung der Schwerkraft (bei ausreichender Dimensionierung) wirkend ausgerichtet.

Bevorzugt weist die Verriegelungseinrichtung oder das Fahrzeug einen Aktuator auf, der derart mit dem oder den Verriegelungselementen zusammenwirkt, dass diese bei Betätigung des Aktuators aus der Sperrposition in die Freigabeposition ausgelenkt werden. Als Aktuator wird vorzugsweise ein pneumatisches, hydraulisches, elektromagnetisches oder rein mechanisches Kraftübertragungsmittel vorgesehen. Der Aktuator wird vorzugsweise per Knopfdruck, elektronischer Steuerschaltung und/oder Sensoren gestützt betätigt, was von Außerhalb des Fahrzeugs oder von Innerhalb des Fahrzeugs geschehen kann, bei entsprechender Bereitstellung von Signalleitungen zur Signal- und/oder Kraftübertragung.

Gemäß einer besonders bevorzugten Ausführungsform der Erfindung weist die Verriegelungseinrichtung ein oder mehrere Sicherungselemente auf, welche derart beweglich an der Verriegelungseinrichtung angeordnet sind, dass sie während der Übergabe der Plattform an das Fahrzeug gegen eine zweite Rückstellkraft ausgelenkt werden. Dies geschieht mit anderen Worten, während die Plattform in Richtung der zum Transport bestimmten Endlage auf die Ladefläche verbracht wird.

Vorzugsweise sind das oder die Sicherungselemente dazu eingerichtet, mittels der zweiten Rückstellkraft aus der ausgelenkten Position in eine Sicherungsposition bewegt zu werden, wenn das oder die Verriegelungselemente in die Freigabeposition ausgelenkt werden.

Das oder die Sicherungselemente sind vorzugsweise dazu eingerichtet, in der Sicherungsposition mit der Verriegelungsaufnahme der Plattform derart in Anlage zu gelangen, dass die erste Rückstellkraft aufgenommen wird und das oder die Verriegelungselemente außerhalb der Verriegelungsposition gehalten werden. Auf diese Weise wird folgende vorteilhafte Betriebsweise erreicht: Das oder die Sicherungselemente befinden sich im Normalfall in einer sicherungsbereiten Stellung. Beim Zuführen der Plattform zu der Ladefläche des Fahrzeugs werden das oder die Sicherungselemente entgegen der zweiten Rückstellkraft durch die Plattform verdrängt und nehmen eine nicht sicherungsbereite Stellung ein, dies allerdings nur temporär. Die zweite Rückstellkraft wirkt darauf hin, dass die Sicherungselemente ihre sicherungsbereite Stellung in Abwesenheit des sie verdrängenden Strukturelements wieder einnehmen. Genau dieser Zustand wird auf vorteilhafte Weise herbeigeführt, wenn das oder die Verriegelungselemente aus der Sperrposition in die Freigabeposition ausgelenkt werden. Sobald das für die Auslenkung entgegen der zweiten Rückstellkraft verantwortliche Strukturelement nicht mehr in Kontakt mit den Sicherungselementen steht, springen diese mittels der zweiten Rückstellkraft in die sicherungsbereite Stellung. Sodann gelangen die Sicherungselemente mit der Plattform bzw. der Verriegelungsaufnahme der Plattform in Anlage, wodurch auch in Abwesenheit der Betätigung des Aktuators das oder die Verriegelungselemente daran gehindert werden, von der Freigabeposition in die Sperrposition zurückzukehren. Wird die Plattform aus ihrer übergebenen Position, also aus der für den Transport bestimmten Endlage heraus entfernt, wird die Anlage des oder der Sicherungselemente gegen die Verriegelungsaufnahme der Plattform vorzugsweise so lange aufrechterhalten, bis die Verriegelungsaufnahme und die Verriegelungseinrichtung weit genug voneinander entfernt sind, dass die Verriegelungselemente beim Zurückschnappen mittels der ersten Rückstellkraft nicht mehr in Eingriff mit der Verriegelungsaufnahme gelangen können. Dies wird vorzugsweise erreicht, indem die Anlage der Verriegelungsaufnahme als Absatz oder Kante ausgebildet ist, und die Sicherungselemente sich in Richtung der Einfuhr- bzw. Ausfuhrbewegung der Plattform relativ zur Ladefläche erstrecken, so dass die Sicherungselemente auf dem Vorsprung der Verriegelungsaufnahme entlang gleiten können, während diese entfernt wird, im Wesentlichen ohne dass die ausgelenkte Position des oder der Verriegelungselemente verlassen wird.

Gemäß einer weiteren bevorzugten Ausführungsform sind das oder die Sicherungselemente als federunterstützter, in eine Ausnehmung zumindest schrittweise versenkbar angeordneter Körper ausgebildet, insbesondere als Bolzen oder Scheibe.

Das Fahrzeug weist vorzugsweise einen Eingangs-/Ausgangs-Bereich auf, durch welchen hindurch die Plattform dem Fahrzeug übergeben wird, oder von dem Fahrzeug übernommen wird. Die Verriegelungseinrichtung ist vorzugsweise an einem zu dem Eingangs-/Ausgangs-Bereich distalen Ende der Ladefläche angebracht. Hierdurch wird die Verriegelungseinrichtung aus dem Eingangs- bzw. Ausgangsbereich des Fahrzeugs entfernt, so dass das bzw. die notwendigerweise zum Verriegeln vorhandenen Strukturelemente nicht länger ein störender Einflussfaktor beim Ent- oder Beladen des Fahrzeugs mit einer anderen als der erfindungsgemäß vorgeschlagenen Plattform sind. Zudem wird es Unbefugten erschwert, die Entriegelung der Plattform von dem Fahrzeug vorzunehmen, weil die Verriegelungseinrichtung und vorzugsweise auch die Betätigungsmittel für den Aktuator von der zum Eingangs-/Ausgangs-Bereich proximalen Seite des Fahrzeugs (üblicherweise dem Heck, welches schlecht einsehbar ist) in Richtung der Fahrzeugseite bzw. -front verlegt worden ist, welche besser einsehbar ist.

Die Verriegelungseinrichtung ist vorzugsweise teilweise oder vollständig in die Ladefläche des Fahrzeugs eingelassen, so dass nur das oder die Verriegelungselemente über die Ladefläche hinaus vorstehen.

Die vorliegende Erfindung löst die ihr zugrunde liegende Aufgabe zudem bei einer Plattform der eingangs genannten Art, indem die Plattform Außenabmaße aufweise, die der Ladefläche des Fahrzeugs angepasst sind, und an der Plattform mindestens eine Verriegelungsaufnahme zum Zusammenwirken mit einer Verrieglungseinrichtung eines Fahrzeugs gemäß einer der bevorzugten Ausführungsformen angeordnet ist, welche weiter oben beschrieben sind.

Vorzugsweise sind an zwei in Längsrichtung der Plattform gegenüberliegenden Enden bzw. Stirnseiten der Plattform jeweils eine oder mehrere Verriegelungsaufnahmen angeordnet.

Die Verriegelungsaufnahme bzw. Verriegelungsaufnahmen weisen vorzugsweise eine oder mehrere Ausnehmungen zur wenigstens teilweisen bzw. abschnittsweisen Aufnahme eines jeweiligen Verriegelungselements in Sperrposition bei erfolgter Übergabe der Plattform an das Fahrzeug auf. Die eine oder mehreren Ausnehmungen ist bzw. sind vorzugsweise korrespondierend zu Vorsprüngen der Verriegelungselemente ausgebildet, um in Sperrposition der Verriegelungselemente einen Formschluss oder jedenfalls Hintergriff zu gewährleisten.

In einer weiteren bevorzugten Ausführungsform weist die jeweilige Verriegelungsaufnahme einen oder mehrere Verdrängungskörper zum Auslenken des oder der Verriegelungselemente gegen die erste Rückstellkraft während der Übergabe der Plattform an das Fahrzeug auf. Der Verdrängungskörper ist vorzugsweise als zur Bewegungsrichtung der Plattform bzw. Verriegelungsaufnahme in Übergaberichtung hin verjüngt ausgebildetes Strukturelement ausgebildet, beispielsweise als Keil oder Dorn. Aufgrund einer in dieser Richtung (welche die Einführrichtung ist) ausgebildeten schrägen Fläche des Verdrängungskörpers gleitet das oder bzw. gleiten die Verriegelungselemente an der schrägen Fläche entlang und werden auf diese Weise gegen die erste Rückstellkraft ausgelenkt.

In einer weiteren bevorzugten Ausführungsform ist die Verriegelungsaufnahme zur Aufnahme der ersten Rückstellkraft derart ausgebildet, dass das oder die Verriegelungselemente außerhalb der Verriegelungsposition gehalten werden. Hierzu weist die Verriegelungsaufnahme vorzugsweise ein Widerlager in Form einer Kante oder Ausnehmung auf, derart ausgebildet, dass ein Formschluss mit den an der Verriegelungseinrichtung vorgesehenen Sicherungselementen erreichbar ist. Alternativ weist die Verriegelungsaufnahme eine Fläche mit erhöhtem Reibkoeffizienten auf, der zum Erreichen einer kraft- oder reibschlüssigen Verbindung zwischen dem oder den Sicherungselementen und der Verriegelungsaufnahme angepasst ist.

Hinsichtlich weiterer Vorteile der erfindungsgemäßen Plattform wird auf die obigen Ausführungen zum erfindungsgemäßen Fahrzeug verwiesen..

Die Erfindung löst die ihr zugrunde liegende Aufgabe des Weiteren bei einem Transportsystem der eingangs bezeichneten Art, indem das Transportsystem ein Fahrzeug gemäß einer der weiter oben beschriebenen bevorzugten Ausführungsformen, und eine Plattform gemäß einer der weiter oben beschriebenen bevorzugten Ausführungsformen aufweist. Hinsichtlich vorteilhafter Weiterbildungen des Transportsystems wird auf die weiter oben beschriebenen bevorzugten Ausführungsformen des Fahrzeugs und der Plattform verwiesen.

Die Erfindung löst die ihr zugrunde liegende Aufgabe des Weiteren bei einem Logistiksystem der eingangs bezeichneten Art, mit mindestens einer Plattform, welche im Wesentlichen Ausmaße aufweist, die der Ladefläche des Fahrzeugs angepasst sind, einer Übergabestation zum Übernehmen der Plattform von einem Lager oder zur Übergabe dorthin, wobei die Übergabestation eine Aufnahme aufweist, auf der die Plattform zur Anlage kommt, wobei die Plattform zwischen dem Fahrzeug und der Aufnahme und/oder zwischen dem Lager und der Aufnahme förderbar ist, und wobei die Plattform gemäß einer der weiter oben beschriebenen bevorzugten Ausführungsformen ausgebildet ist.

In einer vorteilhaften Weiterbildung umfasst das erfindungsgemäße Logistiksystem zudem ein Fahrzeug gemäß einer der weiter oben beschriebenen bevorzugten Ausführungsformen.

Im Folgenden wird die Erfindung anhand bevorzugter Ausführungsformen und unter Bezugnahme auf die beigefügten Figuren näher beschrieben. Hierbei zeigen
- Figur 1: die Darstellung eines erfindungsgemäßen Fahrzeugs mit Plattform,
- Figur 2: eine Detailansicht der Darstellung aus Figur 1,
- Figur 3: eine weitere Detailansicht in Ausbruchsdarstellung des Fahrzeugs aus den Figuren 1 und 2,
- Figur 4: eine Detailansicht einer Verriegelungseinrichtung für ein Fahrzeug gemäß der Erfindung,
- Figur 5: eine weitere Detailansicht, teilweise ausgebrochen, des Fahrzeugs und der Plattform,
- Figur 6: eine alternative Darstellung der Anordnung gemäß Figur 5, und
- Figuren 7 bis 13: das Zusammenwirken von Fahrzeug und Plattform in verschiedenen Betriebsstellungen.

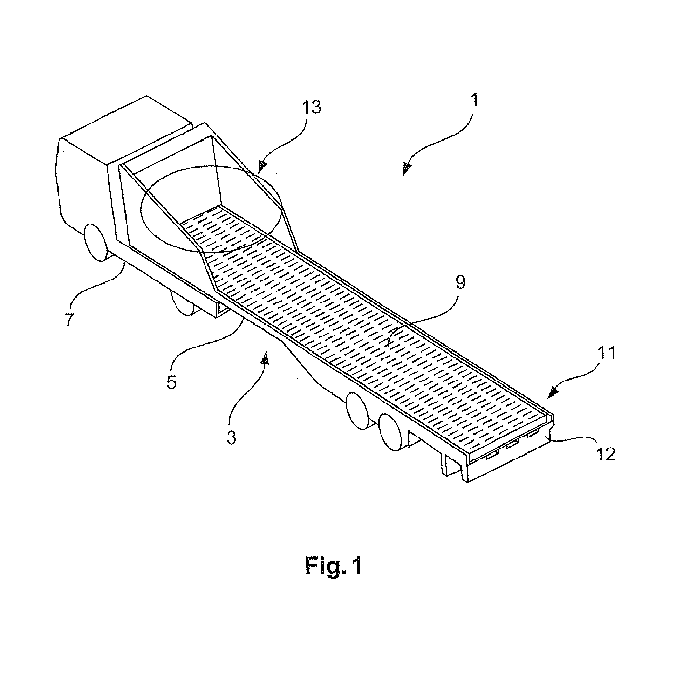

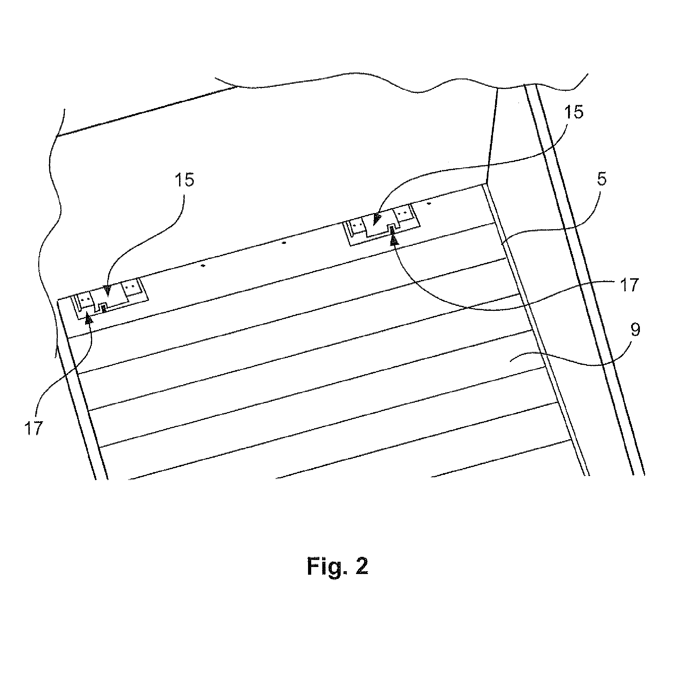

Figur 1 zeigt ein Fahrzeug 1. Das Fahrzeug 1 weist einen Anhänger 3 auf, der gemäß Figur 1 als Auflieger ausgebildet ist. Alternativ kann der Anhänger 3 aber auch entsprechend anderer, typischer Anhängerformen ausgebildet sein. Der Anhänger 3 weist eine Ladefläche 5 auf. Das Fahrzeug 1 weist zudem eine Zugmaschine 7 auf. Auf der Ladefläche 5 des Fahrzeugs 1 befindet sich eine Plattform 9, die an das Fahrzeug 1 übergeben worden ist. Die gezeigte Position der Plattform 9 auf der Ladefläche 5 entspricht der für den Transport bestimmten Endposition. Die Plattform 9 ist in einem Eingangs-/Ausgangs-Bereich 11 des Fahrzeugs 1 in das Fahrzeug eingeführt worden. Das Fahrzeug 1 weist an jener Stelle eine Ladekante 12 auf. In einem zu dem Eingangs-/Ausgangs-Bereich 11 distalen Abschnitt 13 des Fahrzeugs 1 befindet sich eine Verriegelungseinrichtung 15, die mit einer Verriegelungsaufnahme 17 der Plattform 9 zusammenwirkt, näher dargestellt in Figur 2.

Der in Figur 2 gezeigte Abschnitt des Fahrzeugs 1 betrifft die auf der Ladefläche 5 angeordnete Plattform 9. Die Verriegelungseinrichtung 15 befindet sich in dem in Figur 2 gezeigten Zustand in Sperrposition und in Eingriff mit einer Verriegelungsaufnahme 17. Die Verriegelungsaufnahme 17 ist an der Plattform 9 ausgebildet. In dem gezeigten Ausführungsbeispiel ist die Verriegelungseinrichtung 15 zweiteilig ausgebildet, was durch die beiden Baugruppen in Figur 2 links und rechts am Stirnende der Ladefläche 5 bzw. der Plattform 9 angedeutet ist.

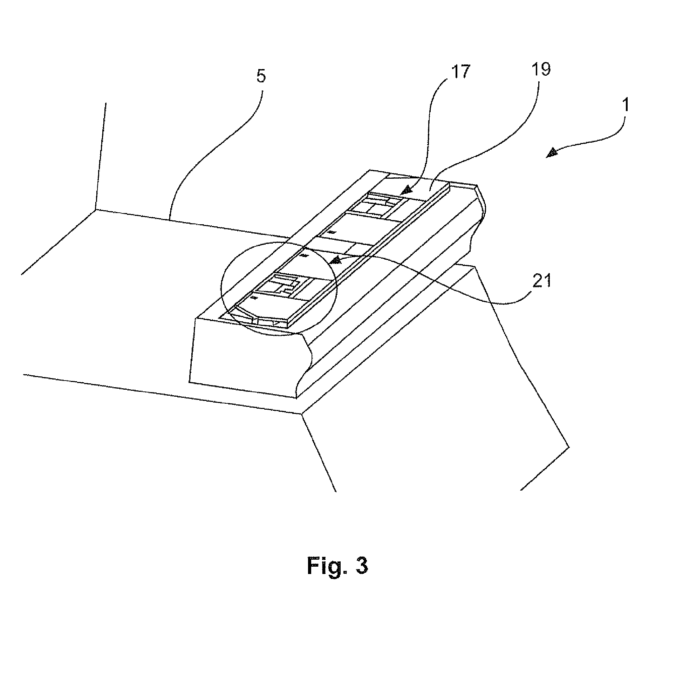

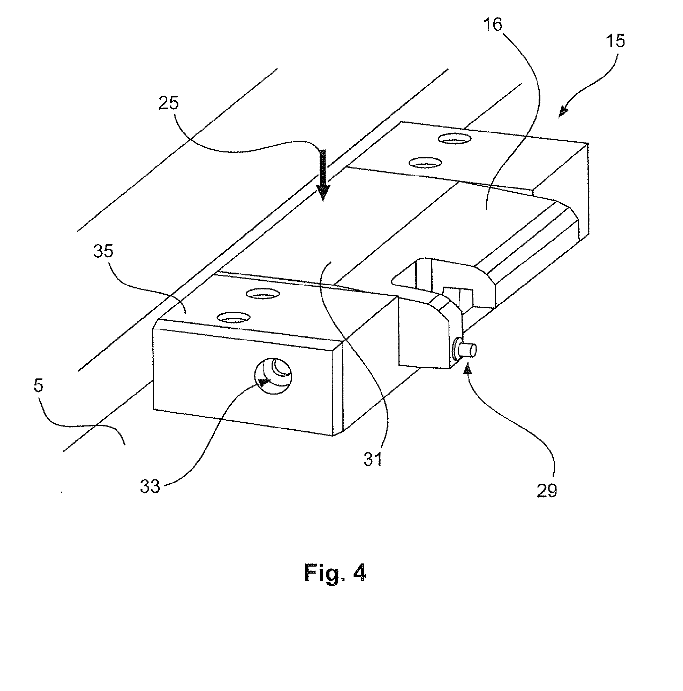

In Figur 3, in welcher die meisten der vorstehend zu den Figuren 1 und 2 beschriebenen Bauteile teilweise dargestellt sind, ist das Zusammenwirken der Plattform 19 mit der Ladefläche 5 dargestellt. Die Verriegelungsaufnahme 17 ist in Figur 3 ohne die korrespondierende Verriegelungseinrichtung 15 abgebildet, um einen Blick auf die Verriegelungsaufnahme freizugeben. Durch Bezugszeichen 21 angedeutet und eingekreist ist ein Bereich, in dem die Verriegelungsaufnahme normalerweise sitzen würde. Die dort in Figur 3 nicht gezeigte Verriegelungseinrichtung 15 ist isoliert in Figur 4 abgebildet.

Die Verriegelungseinrichtung 15, die in Figur 4 dargestellt ist, weist zwei Baugruppen auf, von denen eine in Figur 4 dargestellt ist. Daran ausgebildet ist ein Verriegelungselement 16, welches um eine Achse 33 schwenkbar an einem Grundkörper befestigt ist. Der Grundkörper ist mittels Befestigungsmitteln 35 mit der Ladefläche 5 verbunden. Das Verriegelungselement 16 weist eine Kontaktfläche 31 auf, die zum Zusammenwirken mit einem (nicht dargestellten) Aktuator ausgebildet ist. Mittels des Aktuators wird die Kontaktfläche 31 in Richtung des Pfeils 25 im Betätigungsfall abwärts bewegt, wodurch sich die Schwenkbewegung des Verriegelungselements 16 einstellt.

An dem Verriegelungselement 16 ist ein Vorsprung 27 ausgebildet, welcher zum Eingriff in eine korrespondierende Ausnehmung der Verriegelungsaufnahme 17 (in Figur 4 nicht dargestellt) angepasst ist. An einem Endabschnitt des Verriegelungselements 16 der Verriegelungseinrichtung 15 ist zudem in dem gezeigten Ausführungsbeispiel ein Sicherungselement 29 ausgebildet. Das Sicherungselement 29 ist in diesem Fall ein jedenfalls teilweise versenkbarer Bolzen mit abgerundetem Kopf. Bezüglich alternativer Ausgestaltungen wird auf die Beschreibungseinleitung verwiesen.

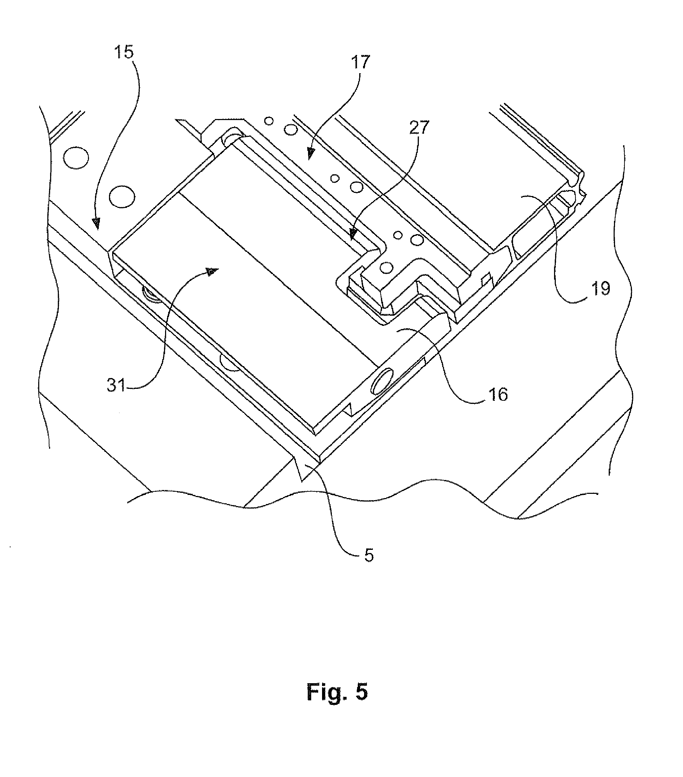

Figur 5 zeigt eine Darstellung des Zusammenspiels zwischen Verriegelungseinrichtung 15 und Verriegelungsaufnahme 17 von schräg oben (bei bestimmungsgemäß mit der Ladefläche 5 verbundener Anordnung). Das Verriegelungselement 16 befindet sich in Sperrposition, die Kontaktfläche 31 ist nicht herabgedrückt. Der Vorsprung 27 befindet sich in Eingriff bzw. Hintergriff mit einer korrespondierenden Ausnehmung der Verriegelungsaufnahme 17. Angedeutet ist in Figur 5 auch die Befestigung der Verriegelungsaufnahme 17 an einem Profil 19, welches seinerseits mit der Plattform 9 (nicht dargestellt) verbunden ist.

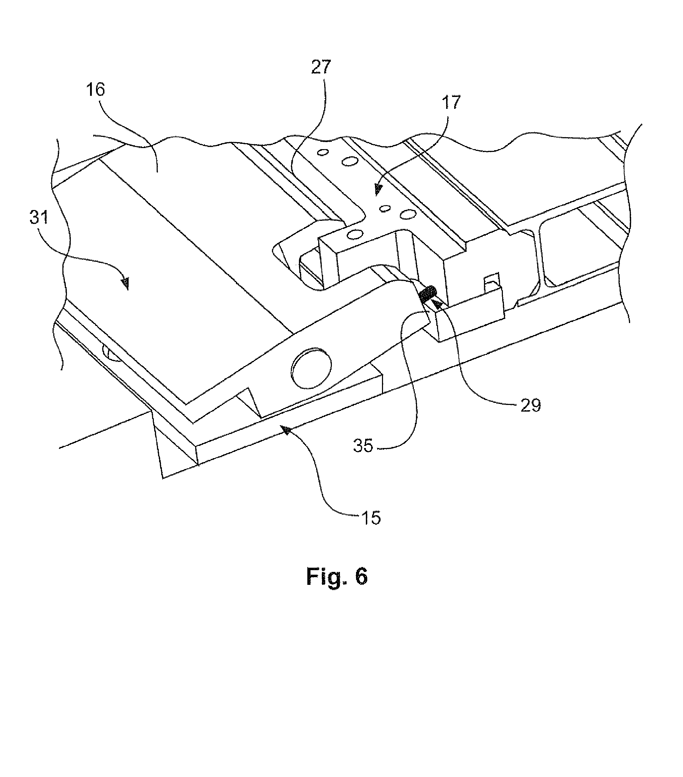

Der gleiche Abschnitt, der in Figur 5 von schräg oben zu sehen ist, ist in Figur 6 aus leicht verändertem Betrachtungswinkel erneut abgebildet, allerdings in einer anderen Betriebsstellung. Die Kontaktfläche 31 der Verriegelungseinrichtung 15 befindet sich in herabgedrücktem Zustand, wodurch das Verriegelungselement 16 aus der Sperrposition heraus ausgelenkt worden ist. Der Vorsprung 27 befindet sich nicht in Eingriff mit der korrespondierenden Ausnehmung der Verrieglungsaufnahme 17. In Figur 6 ist zudem dargestellt, dass das Sicherungselement 29 sich in sicherungsbereiter Stellung befindet und an einer Kante 35 der Verriegelungsaufnahme 17 zur Anlage gebracht ist, wodurch eine Sicherungsposition hergestellt ist. Der in Figur 6 dargestellt Zustand wird somit auch aufrechterhalten, wenn der Aktuator keine Kraft auf die Kontaktfläche 31 ausübt.

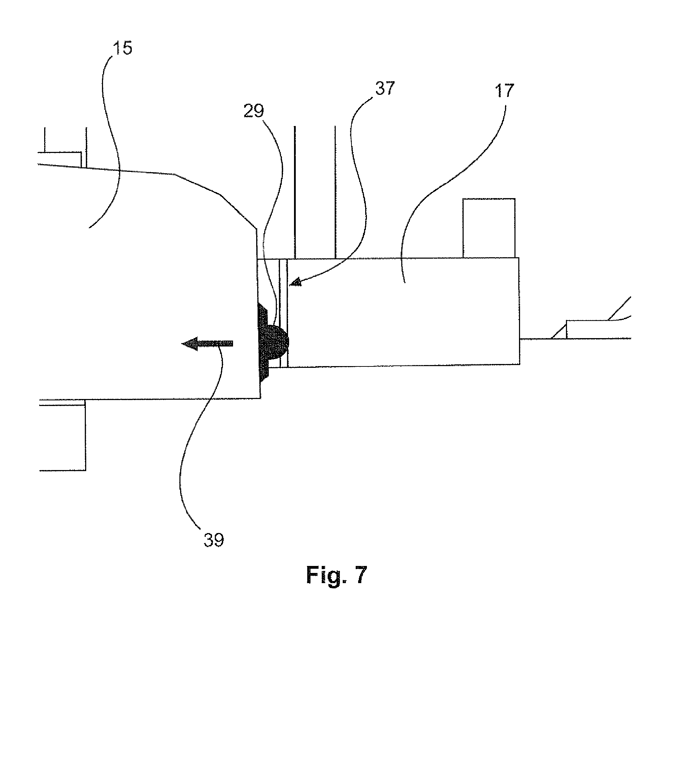

Figur 7 zeigt in einer Seitenansicht den in Figur 5 räumlich dargestellten Betriebszustand. Das Sicherungselement 29 ist in Richtung des Pfeils 39 jedenfalls teilweise in das Innere der Verriegelungseinrichtung 15 verdrängt und wird in dieser Stellung durch Anlage gegen eine Stirnfläche 37 der Verriegelungsaufnahme 17 gehalten.

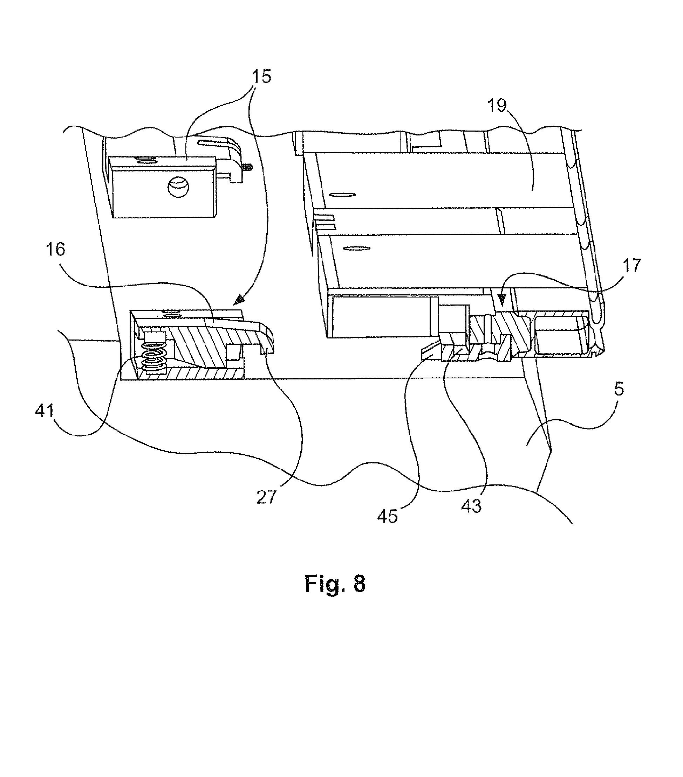

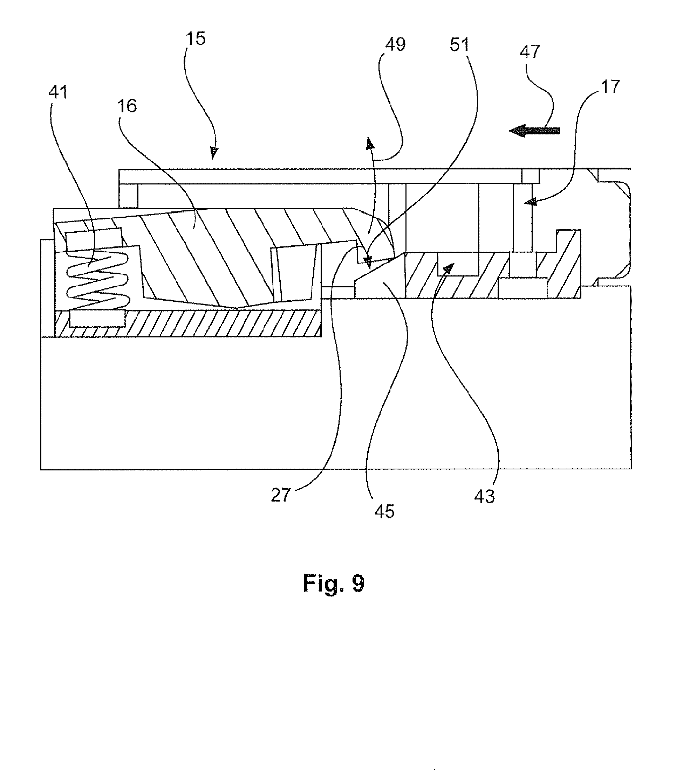

Die Abfolge der Figuren 8 bis 11 zeigt das Ineingriffbringen der Verriegelungseinrichtung 15 mit der Verriegelungsaufnahme 17 während der Übergabe der Plattform an das Fahrzeug. Insbesondere wird hierbei verdeutlicht, in welcher Weise verhindert wird, dass das Sicherungselement beim Übergeben der Plattform das Erlangen der Sperrposition des Verriegelungselements 16 nicht behindert. Gemäß Zustand in Figur 8 sind die Verriegelungseinrichtung 15 und die Verriegelungsaufnahme 16 zunächst noch voneinander beabstandet. Die Plattform 9 (nicht dargestellt) ist noch nicht in der für den Transport bestimmten Endposition angelangt. In Figur 9 ist die Verriegelungsaufnahme 17 zusammen mit der Plattform 9 (nicht dargestellt) bereits so weit an die Verriegelungseinrichtung 15 angenähert, dass das Verriegelungselement 16 in Anlage mit der Verriegelungsaufnahme 17 steht. Diese Anlage ist dergestalt, dass der Vorsprung 27 entlang einer schrägen Fläche 51 eines Strukturelements 45 entlanggleitet. Das Strukturelement 50 ist als keilförmiger Vorsprung an der Verriegelungsaufnahme 17 ausgebildet. Infolge des Gleitens entlang der Fläche 51 wir das Verriegelungselement in Richtung des Pfeils 49 ausgelenkt. Im Gegenzug wird ein Rückstellelement 41, welches vorliegend als Schraubenfeder ausgebildet ist, deformiert, wodurch eine Rückstellkraft erzeugt wird, die der Auslenkung in Richtung des Pfeils 49 entgegenwirkt. Die Verriegelungsaufnahme 17 wird in Figur 9 samt der Plattform in Richtung des Pfeils 47 bewegt.

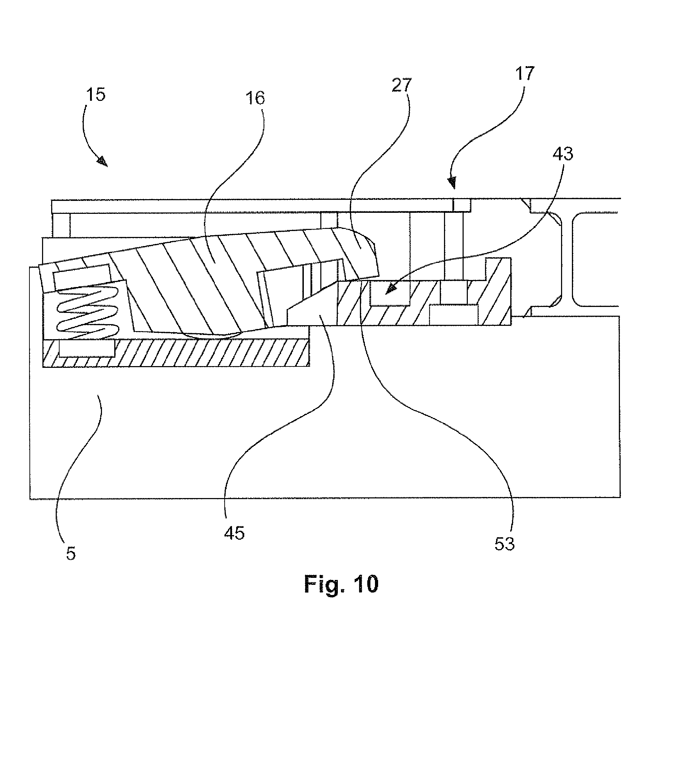

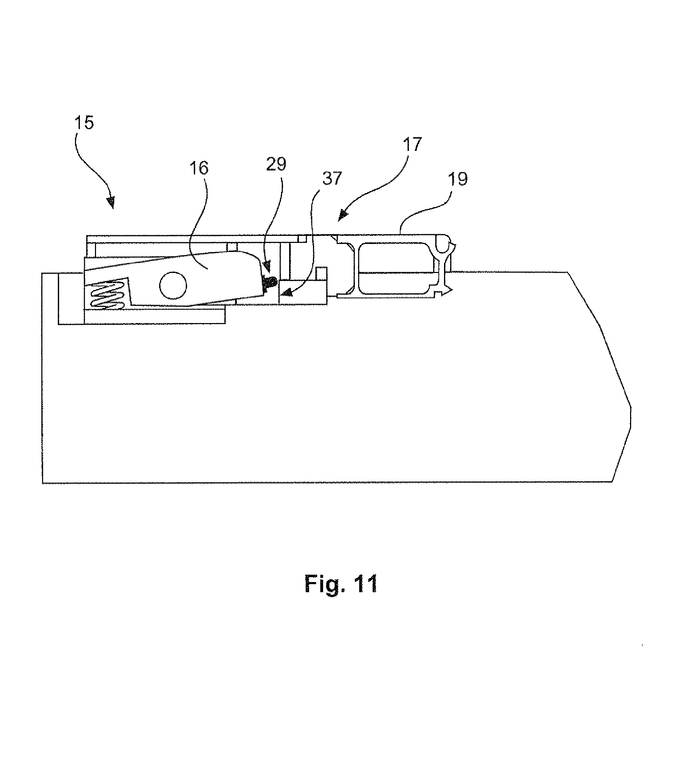

Der in den Figuren 10 und 11 gezeigte Zustand entspricht ebenfalls noch nicht der Anordnung in vollständig übergebener Position der Plattform. Allerdings ist die Verriegelungsaufnahme 17 samt der (nicht dargestellten) Plattform in dieser Stellung bereits so weit an die Verriegelungseinrichtung 15 und somit die Endposition angenähert, dass der Vorsprung 27 des Verriegelungselements 16 das diesen verdrängende Strukturelement 45 passiert hat und nunmehr auf einer im Wesentlichen parallel zu der Ein-/Ausführungs-Ebene verlaufenden Fläche 53 angeordnet ist. Das Verriegelungselement 16 steht kurz vorm Ineingriffgeraten mit der Verriegelungsaufnahme 16 durch Eingreifen des Vorsprungs 27 in die korrespondierende Ausnehmung 43. In dieser Stellung ist, wie in Figur 11 zu sehen ist, das Sicherungselement 29 nur so weit mit dem Verriegelungselement 16 gemeinsam nach oben ausgelenkt, dass es nach wie vor in Kontakt mit der Stirnfläche 37 der Verriegelungsaufnahme 17 in Kontakt steht. Nachdem während des Vorgangs der Übergabe der Plattform an das Fahrzeug das Verriegelungselement nicht mehr weiter ausgelenkt wird, kann das Sicherungselement 29 der das Sicherungselement 29 verdrängenden Stirnfläche 37 nicht ausweichen.

Wenn ausgehend von Figur 11 die Verriegelungsaufnahme 17 noch weiter an die Verriegelungseinrichtung 15 angenähert wird, wird das Sicherungselement 29 in das Innere des Verriegelungselements 16 hinein verdrängt, der Vorsprung 27 in Eingriff mit der korrespondierenden Ausnehmung 43 gebracht, und das Verriegelungselement 16 mittels der Rückstellkraft des Rückstellelements 41 in Sperrposition verbracht (Zustand siehe Figur 5 und 7).

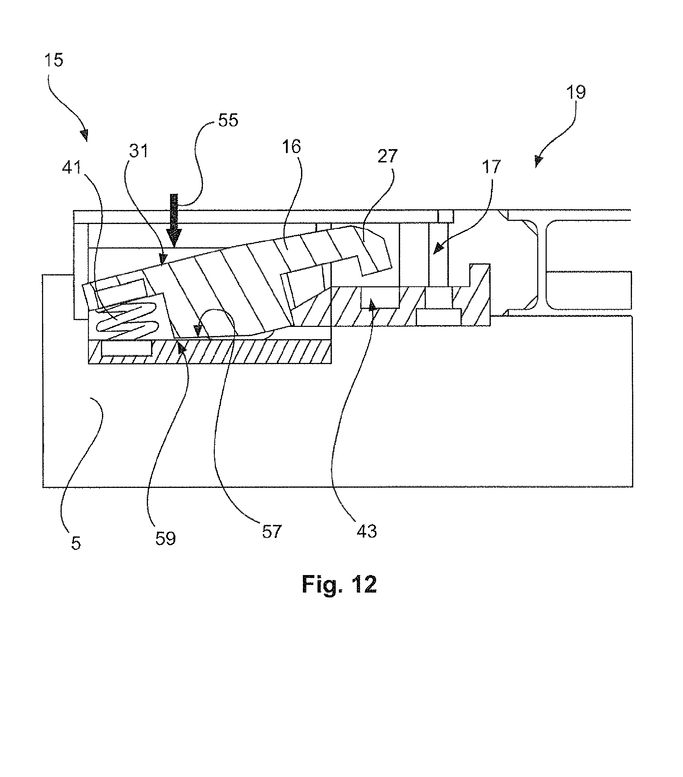

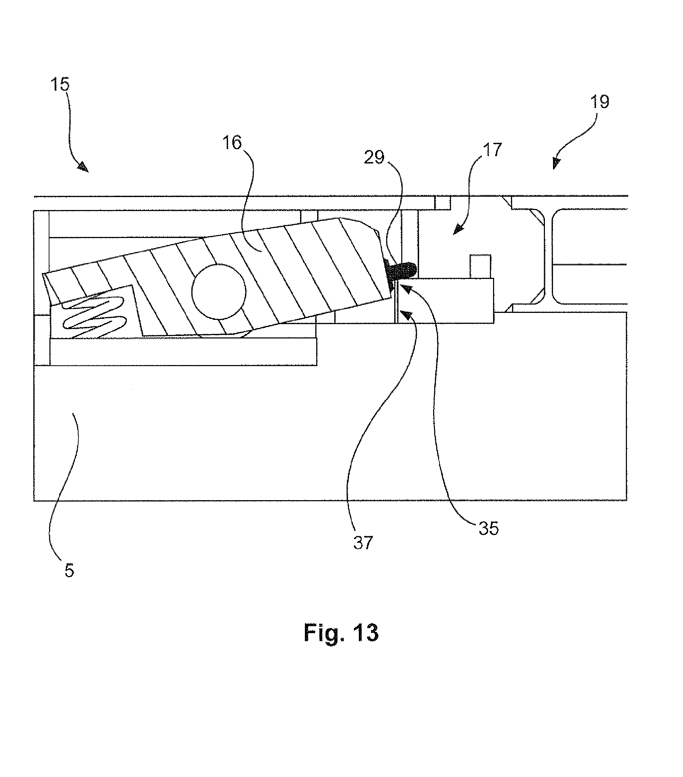

Der in Figur 12 und 13 gezeigte Betriebszustand entspricht der Stellung der Verriegelungseinrichtung in Freigabeposition. Diese wird ausgehend von dem in den Figuren 5 und 7 gezeigten Zustand in Sperrposition erreicht, indem der (nicht dargestellte) Aktuator das Verriegelungselement 16 entgegen der Rückstellkraft von Rückstellelement 41 in Richtung des Pfeils 55 auslenkt. Die Auslenkung wird begrenzt durch die einander gegenüberliegenden Flächen 57, 59 der Verriegelungseinrichtung 15. In dem in Figur 12 gezeigten Zustand befinden sich diese Flächen annähernd in Anlage miteinander. Die Verriegelungsaufnahme 17 und die Verriegelungseinrichtung sind nicht miteinander in Eingriff, der Vorsprung 27 des Verriegelungselements 16 ist aus der Ausnehmung 43 herausgehoben.

Die Plattform befindet sich in der Figur 12 gezeigten Stellung allerdings immer noch in der vollständig übergebenen Position (bzw. der für den Transport vorgesehenen Endposition). Wie sich aus Figur 13 ergibt, verhindert das Sicherungselement 29 in Abwesenheit einer Betätigungskraft des Aktuators ein Zurückfallen des Verriegelungselements 16 der Verriegelungseinrichtung 15 in die Sperrposition. Dies ist dadurch erreicht, dass das Verriegelungselement 16 weit genug ausgelenkt worden ist um es dem Sicherungselement 29 zu ermöglichen, an der Stirnfläche 37 vorbei in eine sicherungsbereite Stellung zu gelangen. Dies wird vorzugsweise erreicht, indem das Sicherungselement 29 mittels einer zweiten Rückstellkraft bewegt wird. Das Sicherungselement 29 befindet sich gemäß Figur 13 in Anlage mit einer Kante 35, die an einem Vorsprung der Verriegelungsaufnahme 17 ausgebildet ist. Beim Entfernen der Verriegelungsaufnahme 17 bzw. des Profils 19 bzw. der (nicht dargestellten) Plattform 9 aus der für den Transport bestimmten Endposition gleitet das Sicherungselement 29 zunächst noch an der Kante 35 entlang, wobei die ausgelenkte Position bzw. Freigabeposition des Verriegelungselements 16 der Verriegelungseinrichtung 15 im Wesentlichen aufrechterhalten wird. Wenn die Entfernung zwischen Verriegelungsaufnahme 17 und Verriegelungseinrichtung 15 so groß ist, dass das Sicherungselement 29 nicht mehr mit der Kante 35 in Anlage steht, fällt das Verriegelungselement 16 mittels der ersten Rückstellkraft zwar in Richtung der Sperrposition, nimmt diese allerdings nicht vollständig ein, weil die Ausnehmung 43 der Verriegelungsaufnahme 17 und der Vorsprung 27 der Verriegelungseinrichtung 15 nicht länger in Übereinstimmung liegen. Vielmehr wird ein Zustand gemäß Figur 10 erreicht, indem das Verriegelungselement 16, genauer gesagt der Vorsprung 27, mit einer der Flächen 55 oder der Fläche 51 (Figur 9) in Anlage ist.

## Patentansprüche

1. Fahrzeug (1) zum Transport einer Plattform (9) eines Logistiksystems, mit einer Ladefläche (5) zur Aufnahme der Plattform (9), wobei die Plattform (9) Außenabmaße aufweist, die der Ladefläche (5) des Fahrzeugs angepasst sind, und mit
einer Verriegelungseinrichtung (15) zum Sichern der Plattform (9) auf der Ladefläche (5), wobei die Verriegelungseinrichtung (15)
mit einer an der Plattform (9) ausgebildeten Verriegelungsaufnahme (17) wahlweise in eine Sperrposition oder in eine Freigabeposition bringbar ist, und
ein oder mehrere Verriegelungselemente (16) aufweist, die dazu eingerichtet sind, selbsttätig die Sperrposition zum Fixieren der Plattform (9) einzunehmen, wenn die Plattform (9) an das Fahrzeug (1) übergeben worden ist.

2. Fahrzeug (1) nach Anspruch 1,
wobei das oder die Verriegelungselemente (16) dazu angepasst sind, die Sperrposition einzunehmen, wenn die Verriegelungseinrichtung (15) und die Verriegelungsaufnahme (17) gegeneinander in Anlage gebracht sind.

3. Fahrzeug (1) nach Anspruch 1 oder 2,
wobei das oder die Verriegelungselemente (16) derart beweglich an der Verriegelungseinrichtung (15) angeordnet sind, dass sie während der Übergabe der Plattform (9) an das Fahrzeug (1) gegen eine erste Rückstellkraft ausgelenkt werden und bei erfolgter Übergabe mittels der Rückstellkraft in die Sperrposition gebracht werden.

4. Fahrzeug (1) nach einem der vorstehenden Ansprüche,
wobei die Verriegelungseinrichtung (15) oder das Fahrzeug einen Aktuator aufweist, der derart mit dem oder den Verriegelungselementen zusammenwirkt, dass diese bei Betätigung des Aktuators aus der Sperrposition in die Freigabeposition ausgelenkt werden.

5. Fahrzeug (1) nach einem der vorstehenden Ansprüche
wobei die Verriegelungseinrichtung (15) ein oder mehrere Sicherungselemente (29) aufweist, welche derart beweglich an der Verriegelungseinrichtung (15) angeordnet sind, dass sie während der Übergabe der Plattform (9) an das Fahrzeug (1) gegen eine zweite Rückstellkraft ausgelenkt werden.

6. Fahrzeug (1) nach Anspruch 5,
wobei das oder die Sicherungselemente (29) dazu eingerichtet sind, mittels der zweiten Rückstellkraft aus der ausgelenkten Position in eine Sicherungsposition bewegt zu werden, wenn das oder die Verriegelungselemente (16) in die Freigabeposition ausgelenkt werden.

7. Fahrzeug (1) nach Anspruch 5 oder 6,
wobei das oder die Sicherungselemente (29) dazu eingerichtet sind, in der Sicherungsposition mit der Verriegelungsaufnahme (17) der Plattform (9) derart in Anlage zu gelangen, dass die erste Rückstellkraft aufgenommen wird und das oder die Verriegelungselemente (16) außerhalb der Verriegelungsposition gehalten werden.

8. Fahrzeug (1) nach einem der Ansprüche 5 bis 7,
wobei das oder die Sicherungselemente (29) als federunterstützter, in einer Ausnehmung zumindest abschnittsweise versenkbar angeordneter Körper ausgebildet sind, vorzugsweise als Bolzen oder Scheibe.

9. Fahrzeug (1) nach einem der vorstehenden Ansprüche,
wobei das Fahrzeug (1) einen Eingangs-/ Ausgangsbereich (11) aufweist, durch welchen hindurch die Plattform (9) dem Fahrzeug (1) übergeben wird oder von dem Fahrzeug (1) übernommen wird, und
die Verriegelungseinrichtung (15) an einem zu dem Eingangs-/ Ausgangsbereich (11) distalen Ende (13) der Ladefläche (5) angebracht ist.

10. Plattform (9) für ein Logistiksystem zur Übergabe der Plattform (9) zu einem Fahrzeug (1) und/oder zur Übernahme der Plattform (9) von dem Fahrzeug (1),
wobei die Plattform (9) Außenabmaße aufweist, die der Ladefläche (5) des Fahrzeugs angepasst sind, und
an der Plattform (9) mindestens eine Verriegelungsaufnahme (17) zum Zusammenwirken mit einer Verriegelungseinrichtung (15) eines Fahrzeugs nach einem der vorstehenden Ansprüche zum Fixieren der Plattform (9) angeordnet ist.

11. Plattform (9) nach Anspruch 10,
wobei an zwei in Längsrichtung der Plattform (9) gegenüberliegenden Enden jeweils eine oder mehrere der Verriegelungsaufnahmen angeordnet sind.

12. Plattform (9) nach Anspruch 10 oder 11,
wobei die jeweilige Verriegelungsaufnahme (17) eine oder mehrere Ausnehmungen zur wenigstens teilweisen Aufnahme eines jeweiligen Verriegelungselements (18) in Sperrposition bei erfolgter Übergabe aufweist.

13. Plattform (9) nach einem der Ansprüche 10 bis 12,
wobei die jeweilige Verriegelungsaufnahme (17) einen oder mehrere Verdrängungskörper (45) zum Auslenken des oder der Verriegelungselemente (16) gegen die erste Rückstellkraft während der Übergabe der Plattform (9) an das Fahrzeug (1) aufweist.

14. Plattform (9) nach einem der Ansprüche 10 bis 14,
wobei die Verriegelungsaufnahme (17) zur Aufnahme der ersten Rückstellkraft derart, dass das oder die Verriegelungselemente (16) außerhalb der Verriegelungsposition gehalten werden, ausgebildet ist.

15. Transportsystem für eine Plattform (9) eines Logistiksystems, mit ein Fahrzeug (1) nach einem der Ansprüche 1 bis 9, und
eine Plattform (9) nach einem der Ansprüche 1 bis 14.

16. Logistiksystem zur Übergabe einer Plattform (9) zu einem Fahrzeug (1) oder zur Übernahme der Plattform (9) von dem Fahrzeug (1), mit
mindestens einer Plattform (9), welche im Wesentlichen Ausmaße aufweist, die der Ladefläche (5) des Fahrzeugs angepasst sind,
einer Übergabestation zum Übernehmen der Plattform (9) von einem Lager oder zur Übergabe dorthin, wobei die Übergabestation eine Aufnahme aufweist, auf der die Plattform (9) zur Anlage kommt, wobei die Plattform (9) zwischen dem Fahrzeug (1) und der Aufnahme und/oder zwischen dem Lager und der Aufnahme förderbar ist, und wobei
die Plattform (9) nach einem der Ansprüche 10 bis 14 ausgebildet ist.

17. Logistiksystem nach Anspruch 16, mit
mindestens einem Fahrzeug (1) nach einem der Ansprüche 1 bis 9.
